# EUROPEAN PATENT APPLICATION

(11) **EP 3 364 331 A1**
(43) Date of publication of application: **22.08.2018**
(21) Application number: 18155757.0
(22) Date of filing: 08.02.2018
(51) Int. Cl.: G06F 21/62, H04N 1/00, G06F 3/12

(54) **FEATURE-BASED ACCESS TO A MULTI-FUNCTION PERIPHERAL APPLICATION USING AN ACTIVATION SERVER**

(30) Priority: 21.02.2017 US 201715438095
(71) Applicant: Ricoh Company Ltd., Ohta-ku Tokyo 143-8555 (JP)
(72) Inventor: HONG, Jiang, Campbell, CA 95008 (US)
(74) Representative: Schwabe - Sandmair - Marx

(57) **Abstract**

An approach provides feature-based access to an application executing on a Multi-Function Peripheral (MFP) using an activation server. An activation server includes the capability to create, manage, and activate product keys that are specific to a particular MFP and a subset of features supported by the application executing on the MFP. The application allows user access to the subset of application features that corresponds to its respective product key, and the subset of application features may be changed over time, for example, to add or remove features. Features may include functionality implemented on and/or by an MFP, as well as functionality that is external to an MFP, for example, provided by third party services.

## Description

### FIELD OF THE INVENTION

Embodiments relate generally to providing feature-based access to a Multi-Function Peripheral (MFP) application using an activation server.

### BACKGROUND

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

Multi-function peripherals (MFPs) are devices that provide a wide variety of functionality, such as scanning, printing, copying, faxing, etc. Some MFPs have sophisticated computing architectures that support execution of applications that provide access to a wide variety of features. One of the issues with these types of MFPs is that once a user has been authenticated at a particular MFP, the user is granted access to all of the applications and features on the particular MFP, which makes it difficult for third party application providers to track and charge for services.

### SUMMARY

An MFP comprises a network interface, a user interface configured to display information to a user of the MFP and receive user input from the user of the MFP, one or more processors, one or more memories communicatively coupled to the one or more processors, and a service application. The service application is configured to receive, via the user interface of the MFP, a product key issued by an activation server. The product key is specific to both the MFP and a first subset of one or more features, from a plurality of features supported by the service application. The service application is further configured to generate and transmit, to the activation server, an activation request that includes the product key, and receive, from the activation server, an activation response that specifies the first subset of one or more features, from the plurality of features supported by the service application. In response to receiving, from the activation server, the activation response that specifies the first subset of one or more features, from the plurality of features supported by the service application, the service application allows user access on the MFP to the first subset of one or more features, from the plurality of features supported by the service application. The service application also does not allow user access on the MFP to one or more other features, from the plurality of features supported by the service application, wherein the one or more other features are not part of the first subset of one or more features.

### BRIEF DESCRIPTION OF THE DRAWINGS

In the figures of the accompanying drawings like reference numerals refer to similar elements.
FIG. 1 is a block diagram that depicts an arrangement for providing feature-based access to an application executing on an MFP using an activation server.
FIG. 2 depicts an example implementation of product key data.
FIG. 3A depicts a message ladder diagram that shows example message exchanges made between elements of FIG. 1 during the creation of a new product key.
FIG. 3B depicts a message ladder diagram that shows example message exchanges made between elements of FIG. 1 during the activation of a new product key.
FIG. 4A depicts an activation server login screen accessible via a client device.
FIG. 4B depicts a product key management screen displayed after user credentials have been successfully verified.
FIG. 4C depicts a new product key screen that is displayed in response to a user selecting a "Create New Product Key" option from a product key management screen.
FIG. 4D depicts a manage product keys screen that is displayed in response to a user selecting a "Manage Product Keys" option from a product key management screen.
FIG. 4E depicts an edit product key screen that is displayed in response to a user selecting a product key followed by the "Edit" control from a manage product keys screen.
FIG. 5 is a block diagram that depicts an example computer system upon which embodiments may be implemented.

### DETAILED DESCRIPTION

In the following description, for the purposes of explanation, numerous specific details are set forth in order to provide a thorough understanding of the embodiments. It will be apparent, however, to one skilled in the art that the embodiments may be practiced without these specific details. In other instances, well-known structures and devices are shown in block diagram form in order to avoid unnecessarily obscuring the embodiments.
**I. Overview**
**II. System Architecture**
   **A. Overview**
   **B. MFPs**
   **C. Client Devices**
   **D. Services**
   **E. Activation Server**
**III. Creating, Activating and Managing Product Keys, and Changing Features**
**IV. Feature Updates and Alternatives**
**V. Implementation Examples**

### I. Overview

An approach provides feature-based access to an application executing on an MFP using an activation server. An activation server includes the capability to create, manage, and activate product keys that are specific to a particular MFP and a subset of features supported by the application executing on the MFP. The application allows user access to the subset of application features that corresponds to its respective product key, and the subset of application features may be changed over time, for example, to add or remove features. Embodiments include support for new features and new versions of existing features. Features may include functionality implemented on and/or by an MFP, as well as functionality that is external to an MFP, for example, provided by third party services. The approach provides many benefits, including allowing feature-based billing for MFP applications. The approach also improves the performance of computing systems by reducing or eliminating computational resources, storage resources, and/or time required to support non-enabled application features.

### II. System Architecture

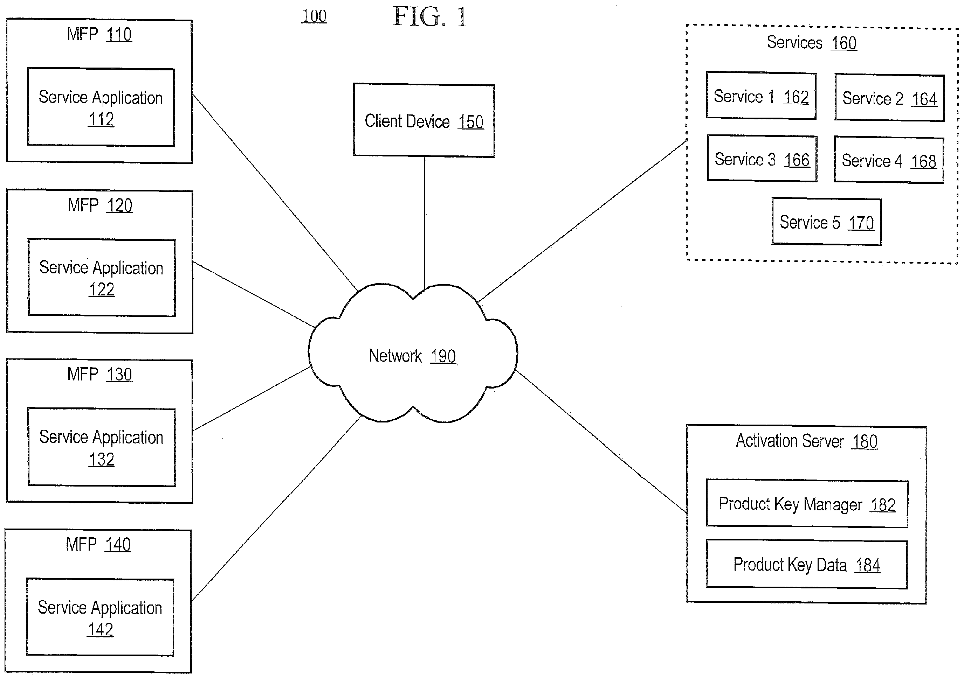

FIG. 1 is a block diagram that depicts an arrangement 100 for providing feature-based access to an application executing on an MFP using an activation server. The particular elements depicted in arrangement 100 are not all required, and embodiments are applicable to arrangement 100 having fewer elements or additional elements that may vary depending upon a particular implementation.

### A. Overview

In the example depicted in FIG. 1, arrangement 100 includes MFPs 110, 120, 130, 140, a client device 150, services 160, and an activation server 180 communicatively coupled by network 190. Arrangement 100 may include fewer or additional elements that may vary depending upon a particular implementation. Network 190 may be implemented by any number and types of networks that may vary depending upon a particular implementation. The elements depicted in FIG. 1 may also have direct communications links with each other and with other elements not depicted in FIG. 1.

### B. MFPs

MFPs 110, 120, 130, 140 are multi-function peripherals that implement one or more functions, such as scanning, printing, copying, facsimile, etc., and MFPs 110, 120, 130, 140 are not required to implement the same functions. MFPs 110, 120, 130, 140 may include computer hardware, computer software, or any combination of computer hardware and computer software to implement the one or more functions. This may include, for example, one or more communications interfaces, a user interface for displaying information to users and for receiving user input, one or more processors, one or more memories, one or more operating systems, one or more processes, and various components and subsystems for performing the functions.

MFPs 110, 120, 130, 140 are each configured with a service application 112, 122, 132, 142, respectively, that provides a plurality of features to users of MFPs 110, 120, 130, 140. Service applications 112, 122, 132, 142 may be implemented as stand-alone processes, plug-ins, library routines, etc., and embodiments are not limited to any particular implementation. The features supported by service applications 112, 122, 132, 142 may include a wide variety of features that vary depending upon a particular implementation, and the features may be implemented by MFPs 110, 120, 130, 140, and/or by external services, such as services 160. Example features include, without limitation, cloud printing, i.e., network printing, archival services, optical character recognition (OCR) services, translation services, business process/workflow services, email services, etc. According to one embodiment, service applications 112, 122, 132, 142 each provide a graphical user interface that allows selective user access to features authorized by a product key maintained by activation server 180 for each MFP 110, 120, 130, 140. Although embodiments are depicted in the figures and described herein in the context of four MFPs, this is done for explanation purposes only, and the approaches described herein are applicable to any number of MFPs.

### C. Client Devices

Client device 150 may be any type of client device that is capable of interacting with other devices over network 190, such as MFPs 110, 120, 130, 140, services 160 and activation server 180. Client device 150 may be implemented by computer hardware, computer software, or any combination of computer hardware and computer software. For example, client device 150 may include one or more processors and one or more memories to support the execution of one or more processes. Example implementations of client device 150 include, without limitation, a workstation, a personal computer, a laptop computer, a tablet computing device, a personal digital assistant, a smart phone, an interactive whiteboard appliance, etc. According to one embodiment, client device 150 is configured with one or more applications that allow a user, such as an administrative user or an end user, to access functionality provided by activation server 180. The one or more applications may include stand-alone client software, a Web browser, etc.

### D. Services

Services 160 implement a wide variety of functionality that may vary depending upon a particular implementation, and services 160 are not limited to any particular functionality. Example functionality includes, without limitation, cloud printing, i.e., network printing, archival services, optical character recognition (OCR) services, translation services, business process/workflow services, email services, etc. In the example depicted in FIG. 1, services 160 includes five services, namely, Service 1 162, Service 2 164, Service 3 166, Service 4 168 and Service 5. Embodiments are not limited to these five services and services 160 may include any number and type of services. Services 160 may be implemented by computer hardware, computer software, or any combination of computer hardware and computer software. For example, services 160 may be implemented by one or more processes executing on computing elements, such as servers. The processes may be implemented by stand-alone software, library routines, plug-ins, widgets, etc. Services 160 may implement one or more application program interfaces (APIs) and one or more communications protocols that may vary depending upon a particular implementation.

### E. Activation Server

Activation server 180 issues and manages product keys for service applications 112, 122, 132, 142. Activation server 180 may be implemented with computer hardware, computer software, or any combination of computer hardware and computer software. For example, activation server 180 may be implemented by one or more processes executing on a stand-alone device or on a network element, such as a server device. Activation server 180 may support an API that allows client device 150 and service applications 112, 122, 132, 142 to invoke various functionality on activation server 180. As described in more detail hereinafter, this includes creating, registering, distributing, and updating product keys, and responding to product key verification requests.

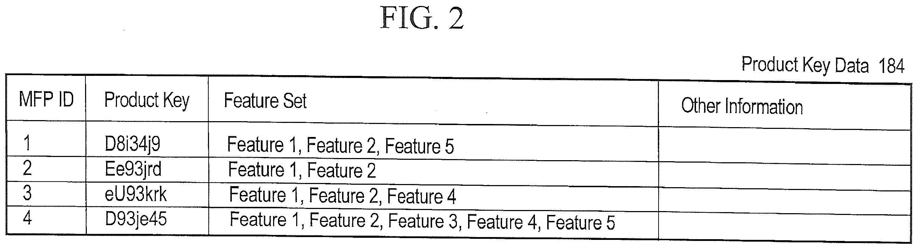

In the example depicted in FIG. 1, activation server 180 includes a product key manager 182 and product key data 184. Activation server 180 may include various other elements that may vary depending upon a particular implementation. For example, activation server 180 may include Web server functionality for providing a Web-based user interface for creating, using and managing product keys, as described in more detail hereinafter. Product key manager 182 implements the functionality described above and hereinafter, and also manages product key data 184. Product key data 184 specifies product keys that are specific to both a particular MFP 110, 120, 130, 140 and a subset of features supported by the corresponding service application 112, 122, 132, 142. As described in more detail hereinafter, product key data 184 may specify other information pertaining to product keys. FIG. 2 depicts an example implementation of product key data 184.

### III. Creating, Activating and Managing Product Keys, and Changing Features

Activation server 180 provides functionality for creating, using and managing product keys. This functionality may be accessed via user screens that display information to users and query information from the users. The user screens may be generated by activation server 180, another entity on behalf of activation server 180, or a combination thereof. The user screens may be in any format that may vary depending upon a particular implementation and embodiments are not limited to any particular implementation. For example, the user screens may be provided in the form of Web pages, accessible via client device 150. The user screens may also be accessed via service applications 112, 122, 132, 142. For purposes of explanation, embodiments are described herein in the context of a user accessing the user screens via client device 150.

### A. Creating Product Keys

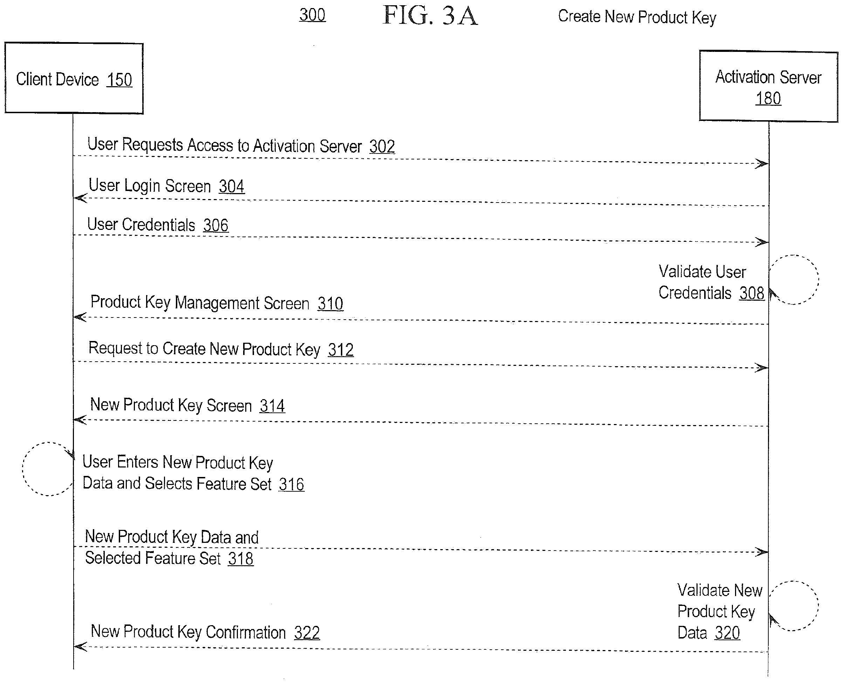

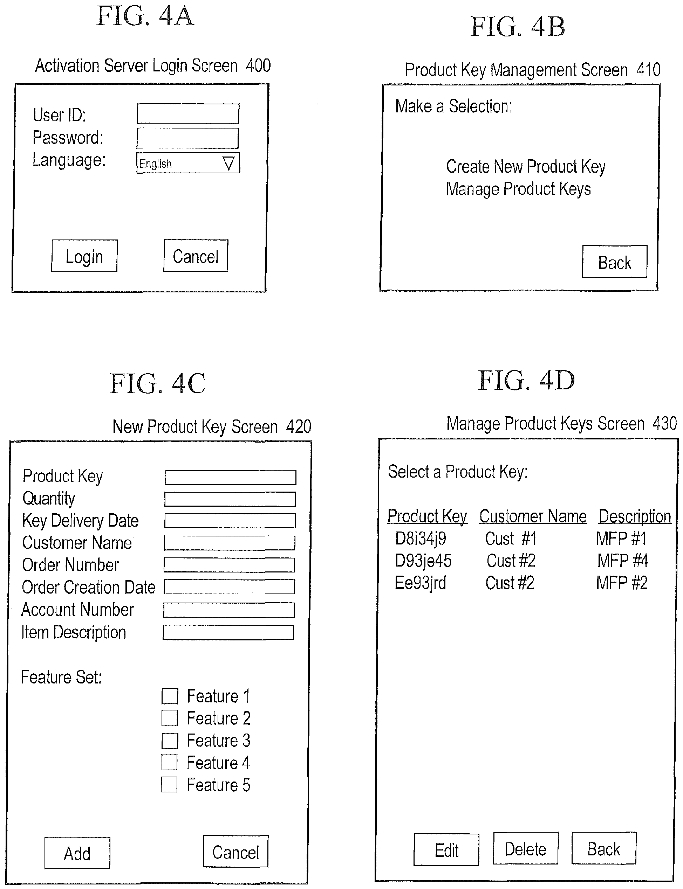

FIG. 3A depicts a message ladder diagram that shows example message exchanges made between elements of FIG. 1 during the creation of a new product key. In step 302, a user requests access to activation server 180. For example, a user of client device 150 may use an application installed on client device 150 to access activation server 180. In response to the request to access activation server 180, in step 304 activation server 180, e.g., product key manager 182, provides a login screen to client device 150. FIG. 4A depicts an activation server login screen 400 accessible via client device 150. Activation server login screen 400 queries a user for user credentials, in the form of a user ID and password, and also allows the user to select a language. In step 306, the user credentials are provided from client device 150 to activation server 180. In step 308, activation server 180 validates the user credentials, either locally, or via a service external to activation server 180.

Upon successful validation of the user credentials, in step 310, activation server 180 provides a product key management screen to client device 150. FIG. 4B depicts a product key management screen 410 displayed after user credentials have been successfully validated. Product management screen 410 allows a user to create a new product key or manage existing product keys. In this example, the "Create New Product Key" and "Manage Product Keys" options may be selectable options. The user may also select a "Back" control to return to activation server login screen 400. In step 312, the user selects the "Create New Product Key" option and a request to create a new product key is generated and transmitted to activation server 108.

In step 314, activation server 108 provides a new product key screen to client device 150. FIG. 4C depicts a new product key screen 420 that is displayed in response to a user selecting the "Create New Product Key" option from product key management screen 410 of FIG. 4B. New product key screen 420 allows a user to specify information for a new product key that will be used to manage the functionality available via service applications 112, 122, 132, 142 on MFPs 110, 120, 130, 140. In the example depicted in FIG. 4C, new product key screen 420 allows a user to specify a product key, a quantity, a key delivery date, a customer name, an order number, an order creation date, an account number and an item description. The item description may identify a particular MFP for which the new product key is intended to be used. Not all of the fields are required and the particular fields made available to a user may vary depending upon a particular implementation. In addition, specific fields may be designated as required or optional, depending upon a particular implementation. For example, the product key field may be designated as a required field while the item description field may be designated as an optional field. Fields may be configured to accept specified types of data and/or value ranges.

New product key screen 420 also allows a user to specify a feature set that will be made available to a user of service applications 112, 122, 132, 142 on MFPs 110, 120, 130, 140. More specifically, selected features, e.g., via the checkboxes, will be available to users on the service application of a particular MFP, while unselected features will not be available to users. Unselected features may be non-visible to users, or visible but not selectable, depending upon a particular implementation.

According to one embodiment, one or more features may be designated as "core" features, i.e., features that are common to all MFPs. For example, as depicted in FIG. 2, in product key data 184, both the Feature 1 and Feature 2 features are core features that are common to all four MFPs. Core features may be conspicuously identified as such on new product key screen 420 and edit product key screen 340. For example, core features may be labeled or otherwise designated as core features and pre-selected. Core features may be configured not be de-selectable by a user. "Add" and "Cancel" controls are provided for adding the new product key or returning to product key management screen 410. In step 316, the user enters the new product key data and selects the feature set via new product key screen 420 and in step 318, the new product key data and selected feature set are transmitted to activation server 180.

In step 320, activation server 180 saves the new product key data and the selected feature set in product key data 184, for example by creating a new entry. For example, activation server 180 may create a new row in product key data 184 for each new product key. The new product key information, other than the product key and feature set, may be stored in the "Other Information" column of product key data 184. Activation server 180 may perform a validation check on the product key data to ensure that the product key data complies with specified data types and/or value ranges.

The issuance of a product key may be conditioned upon payment of costs for the selected application features. Activation server 180 may implement payment services, or payment services may be provided by a payment service that is external to activation server 180. Payment services may handle payment for the cost of application features on a per-feature basis, either as a single payment or on a subscription basis. For example, costs may be designated for individual features or groups of features offered as "packages." Costs may be one-time costs, or recurring costs, for example, on a subscription basis. Any type of cost structure may be used and embodiments are not limited to any particular cost structure. As described in more detail hereinafter, new features and/or new versions of existing features may be added to a product key. The same or different costs may apply to new features and/or new versions of existing features that are added to a product key.

In step 322, in response to the data being successfully verified, and satisfaction of any payment requirements, if applicable, activation server 180 generates and transmits a message to client device 150 to indicate that the product key has been validated and is available for use. Activation server 180 may also send a notification to one or more other users. For example, activation server 180 may generate and transit a notification to one or more users indicating that a new product key has been created, and the notification may specify some or all of the information for the new product key, e.g., the product key and the item description, to enable an end user to know which MFP the new product key is intended for. At this point, the new product key data is not bound to a particular MFP. This occurs later when a particular MFP is registered with activation server 180.

### B. Activating Product Keys

Once a product key has been created, the product key is bound to a particular MFP via a product key activation process. For implementations where an MFP has only a single application that provides features to users, then the product key is indirectly also bound to the application. For implementations where an MFP has multiple applications that provide features, then as described in more detail hereinafter, a product key may also be bound to both a particular MFP and a particular application to allow feature-based access to be provided for multiple applications on a single MFP.

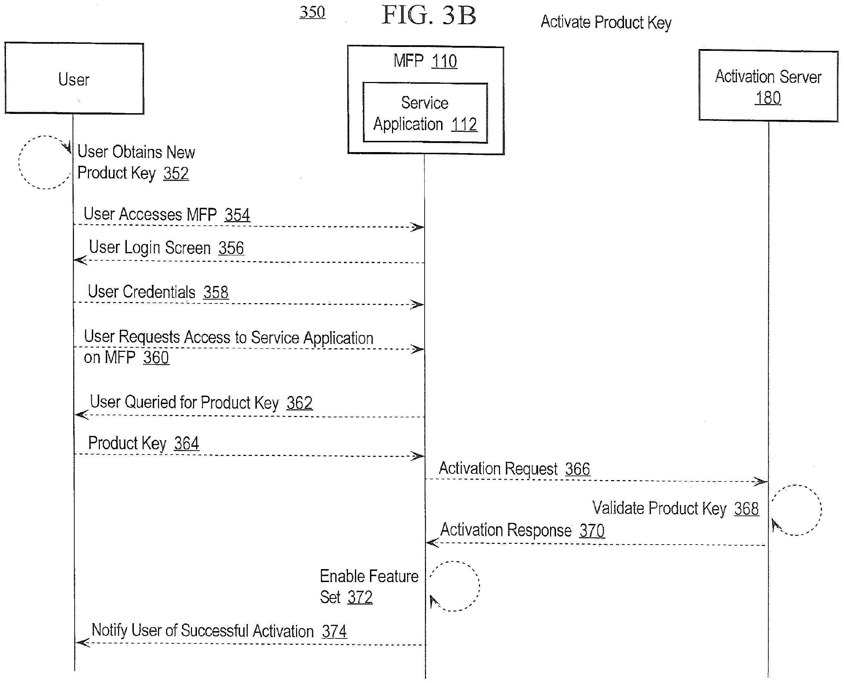

FIG. 3B depicts a message ladder diagram that shows example message exchanges made between elements of FIG. 1 during the activation of a new product key. In step 352, a user obtains a new product key. For example, as previously described herein, a user may create a new product key, or the user may be notified of a new product key created by another user, such as an administrative user.

In step 354, the user accesses an MFP, which in the present example is MFP 110. For example, the user may access MFP 110 via a control panel of MFP 110. In step 356, the MFP provides a user login screen to the user. For example, MFP 110 may display a user login screen that queries the user for user credentials. In step 358, the user provides their user credentials to the MFP. For example, a user may enter a user ID and password via a control panel of MFP 110.

In step 360, the user requests access to a service application on the MFP. For example, the user may request access to service application 112 on MFP 110 by selecting a control, such as an icon, from the control panel or graphical user interface of MFP 110.

In step 362, the user is queried for a product key. In this example, it is presumed that service application 112 has not yet been activated with a product key. Service application 112 may query the user for a product key via a user interface generated by service application 112. In step 364, the user provides a product key to the service application. For example, the user may provide the product key that the user created, or the product key that was supplied to the user.

In step 366, the service application generates and transmits an activation request to an activation server. For example, service application 112 generates and transmits an activation request to activation server 180. The request includes the product key supplied by the user, and also identifies an MFP. For implementations where feature-based access is to be provided on a per-application basis, i.e., for multiple applications on a single MFP, the activation request may also identify a particular service application, although this is not required.

In step 368, the activation server validates the product key. For example, activation server 180 may verify that the product key is contained in product key data 184. When activation server 180 identifies an entry in product key data 184 that has the same product key as the product key contained in the activation request, activation server 180 updates the entry to include the MFP ID supplied in the activation request.

In step 370, the activation server generates and transmits an activation response to the service application. The activation response specifies the feature set that corresponds to the validated product key. For example, suppose that the product key "D8i34j9" for MFP #1 was validated. In this example, the activation response specifies that Feature 1, Feature 2 and Feature 5 correspond to the product key "D8i34j9."

According to one embodiment, a service application is configured with all available features. For example, service application 112 may be installed on MFP 110 with all available features and updated with new features and/or new versions of existing features. In step 372, in response to receiving the activation response from activation server 180, the service application enables the feature set specified in the activation response. Enabling the feature set allows user access to the feature set. For example, service application 112 enables Feature 1, Feature 2 and Feature 5, which allows a user of service application 112 to access Feature 1, Feature 2, and Feature 5. In situations where core features are used and already enabled in a service application, then only the non-core features specified in the activation response need to be enabled. For example, if in the present example Feature 1 and Feature 2 are core features that are already enabled, then only Feature 5 needs to be enabled.

The particular approach used to enable features in an application on an MFP may vary depending upon a particular implementation and embodiments are not limited to any particular approach. For example, service application 112 may allow user access to the features in the feature set, e.g., by making user interface controls available and/or enabled for the features in the feature set. A service application may prevent user access to non-enabled features by removing access to non-enabled features from a graphical user interface generated by service application 112. This may include, for example, removing menu items, tabs, etc., from the graphical user interface generated by service application 112 so that non-enabled features are not viewable by users. As another example, users may be able to view, but not select, non-enabled features. This may be helpful in situations where it is desirable to allow users to view non-enabled features to make them aware of features that they might be interested in adding to the product key. Thus, the approach provides selective access to particular features of an MFP application using a product key.

In step 374, the user is notified of a successful activation of the service application. For example, MFP 110 may display a message to the user indicating that service application 112 has been successfully activated. This message may also specify the particular features that were activated. One or more messages, e.g., in the form of emails, may be generated and transmitted to the user and one or more other users, such as an administrative user.

### C. Managing Product Keys and Changing Features

FIG. 4D depicts a manage product keys screen 430 that is displayed in response to a user selecting the "Manage Product Keys" option from product key management screen 410 of FIG. 4B. Manage product keys screen 430 allows a user to select an existing product key, and then edit or delete the existing product key. A "Back" control is provided for returning to product key management screen 410.

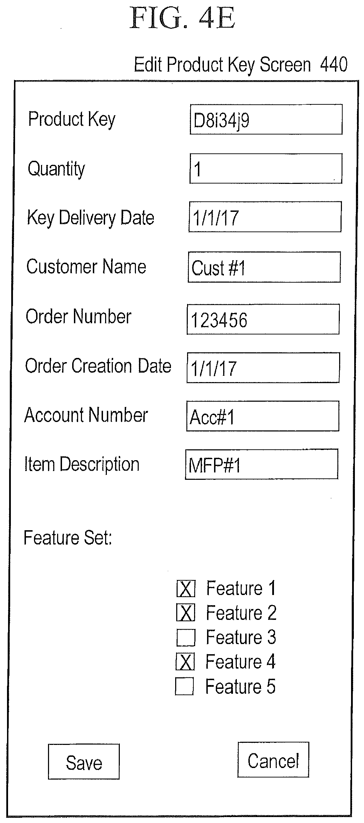

FIG. 4E depicts an edit product key screen 440 that is displayed in response to a user selecting the first product key "D8i34j9" followed by the "Edit" control from manage product keys screen 430. The edit product key screen 440 allows a user to edit any of the information for a product key, as well as change the feature set for a product key. In this example, all of the fields are populated, but embodiments are not limited to this example and in some situations one or more optional fields may not yet be populated. Also in this example, the "Item Description" field identifies the particular MFP, i.e., "MFP#1", that the product key corresponds to.

The edit product key screen 440 also allows a user to change the feature set for a particular product key. For example, a user may add or remove features for a product key by checking or unchecking the boxes adjacent particular features in edit product key screen 440. "Save" and "Cancel" controls are provided for saving changes to a product key or returning to the manage product keys screen 430, respectively. Changes in the feature set for an application may cause a change in costs for the feature set. For example, adding a feature may incur an additional cost that needs to be paid via a payment service. As another example, removing a feature may reduce future costs. Changes in costs may be handled by activation server 180, for example by payment services implemented by activation server 180, or by a payment service that is external to activation server 180.

According to one embodiment, when changes are made to the feature set for a product key, the application on the MFP is notified of the changes so that the new feature set can be made available to users. The way in which an application is notified to changes in the feature set for a product key may vary depending upon a particular implementation and embodiments are not limited to any particular approach. For example, in response to change to a feature set for a particular product key, activation server 180 may generate and transmit to the application, a notification that indicates the changes to the feature set. The notification may specify the new feature set to which users are to be granted access on the application. As another example, an application on an MFP may periodically, or in response to specified events, reissue an activation request to activation server 180 to receive the current feature set for a particular product key. One example of a specified event is a user log in. In this example, the application on the MFP reissues an activation request to activation server 180 in response to an initial user login, and one or more subsequent user logins. The application then enables the features in the revised feature set as previously described herein, which may include enabling access to features that were not previously accessible, and disabling access to features that were previously accessible.

### IV. Feature Updates and Alternatives

According to one embodiment, the approach described herein includes support for feature updates. According to this embodiment, activation server 180 notifies users of new features and/or newer versions of existing features. The notification may be made for features currently associated with a product key, features not currently associated with a product key, or both. Activation server 180 may become aware of new features and newer versions of existing features in different ways that may vary depending upon a particular implementation. For example, activation server 180 may maintain data that specifies the version of each feature associated with each product key, along with data that specifies the most recent version of each feature supported by an application. Activation server 180 compares these two types of data to determine whether a more recent version of an existing feature is available. As another example, activation server 180 may become aware of new features and/or newer versions of existing features via an external service, for example, the creator and/or publisher of the application, a version management system, a database management system, etc.

In response to determining that a new feature and/or a more recent version of an existing feature is available, activation server 180 notifies one or more users. For example, activation server 180 may directly notify a user, for example via email, that a more recent version of a particular existing feature is available, or that a new feature is available. The user may then edit the product key data for a product key, as previously described herein, to add a newer version of an existing feature, or to add a new feature. As another example, activation server 180 may notify the application of the availability of a new feature or a newer version of an existing feature. The next time the user logs into the application, the user is notified of the new features or newer versions of existing features that are available. The user may choose to upgrade the product key to include a new feature or a newer version of an existing feature. This may be accomplished by requesting that the user access activation server 180 as previously described herein, or the user may be automatically redirected to activation server 180 if the application and/or MFP supports this capability.

Although embodiments are depicted in the figures and described herein in the context of a single application on an MFP, embodiments are not limited to these examples and are applicable to any number of applications on an MFP. For example, suppose that a particular MFP has a first application and a second application installed. The approaches described herein may be used to provide feature-based access to both the first application and the second application. In this example, separate product key data 184 may be provided for the first application and the second application. Alternatively, product key data 184 may include additional data, e.g., in the form of another column, that identifies a particular application, so that each product key may be bound to a particular application and a particular MFP.

Although embodiments are depicted in the figures and described herein in the context of providing feature-based access to an application executing on an MFP using an activation server, embodiments are not limited to the MFP context and are applicable to any type of device having an application executing thereon. Example devices may include, without limitation, client devices, server-side devices, network elements, etc.

### V. Implementation Examples

Although the flow diagrams of the present application depict a particular set of steps in a particular order, other implementations may use fewer or more steps, in the same or different order, than those depicted in the figures.

According to one embodiment, the techniques described herein are implemented by one or more special-purpose computing devices. The special-purpose computing devices may be hard-wired to perform the techniques, or may include digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. The special-purpose computing devices may be desktop computer systems, portable computer systems, handheld devices, networking devices or any other device that incorporates hard-wired and/or program logic to implement the techniques.

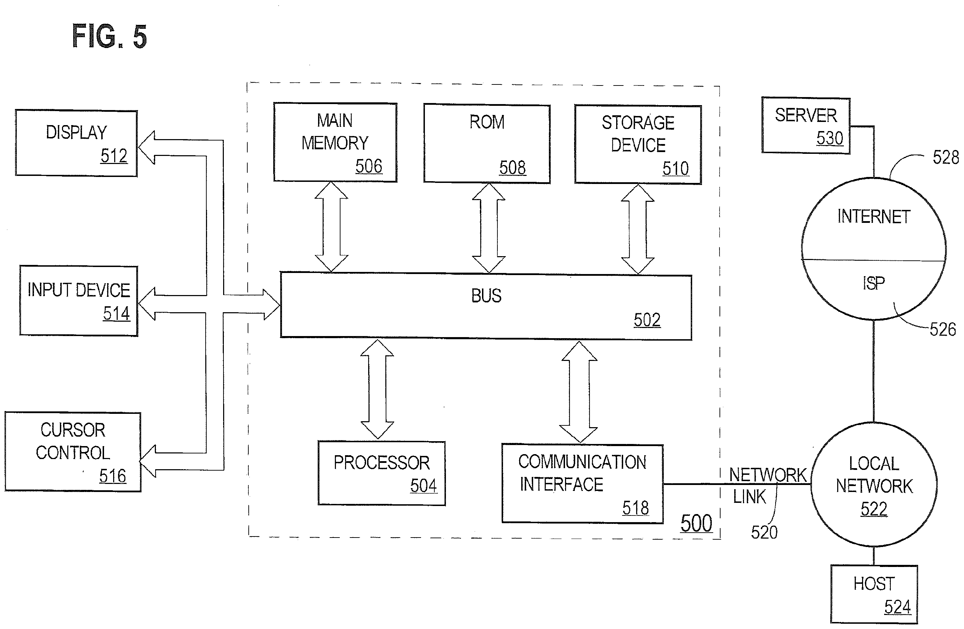

FIG. 5 is a block diagram that depicts an example computer system 500 upon which embodiments may be implemented. Computer system 500 includes a bus 502 or other communication mechanism for communicating information, and a processor 504 coupled with bus 502 for processing information. Computer system 500 also includes a main memory 506, such as a random access memory (RAM) or other dynamic storage device, coupled to bus 502 for storing information and instructions to be executed by processor 504. Main memory 506 also may be used for storing temporary variables or other intermediate information during execution of instructions to be executed by processor 504. Computer system 500 further includes a read only memory (ROM) 508 or other static storage device coupled to bus 502 for storing static information and instructions for processor 504. A storage device 510, such as a magnetic disk or optical disk, is provided and coupled to bus 502 for storing information and instructions.

Computer system 500 may be coupled via bus 502 to a display 512, such as a cathode ray tube (CRT), for displaying information to a computer user. Although bus 502 is illustrated as a single bus, bus 502 may comprise one or more buses. For example, bus 502 may include without limitation a control bus by which processor 504 controls other devices within computer system 500, an address bus by which processor 504 specifies memory locations of instructions for execution, or any other type of bus for transferring data or signals between components of computer system 500.

An input device 514, including alphanumeric and other keys, is coupled to bus 502 for communicating information and command selections to processor 504. Another type of user input device is cursor control 516, such as a mouse, a trackball, or cursor direction keys for communicating direction information and command selections to processor 504 and for controlling cursor movement on display 512. This input device typically has two degrees of freedom in two axes, a first axis (e.g., x) and a second axis (e.g., y), that allows the device to specify positions in a plane.

Computer system 500 may implement the techniques described herein using customized hard-wired logic, one or more ASICs or FPGAs, firmware and/or program logic or computer software which, in combination with the computer system, causes or programs computer system 500 to be a special-purpose machine. According to one embodiment, those techniques are performed by computer system 500 in response to processor 504 processing instructions stored in main memory 506. Such instructions may be read into main memory 506 from another non-transitory computer-readable medium, such as storage device 510. Processing of the instructions contained in main memory 506 by processor 504 causes performance of the functionality described herein. In alternative embodiments, hard-wired circuitry may be used in place of or in combination with software instructions to implement the embodiments. Thus, embodiments are not limited to any specific combination of hardware circuitry and software.

The term "non-transitory computer-readable medium" as used herein refers to any non-transitory medium that participates in providing data that causes a computer to operate in a specific manner. In an embodiment implemented using computer system 500, various computer-readable media are involved, for example, in providing instructions to processor 504 for execution. Such media may take many forms, including but not limited to, non-volatile and volatile non-transitory media. Non-volatile non-transitory media includes, for example, optical or magnetic disks, such as storage device 510. Volatile non-transitory media includes dynamic memory, such as main memory 506. Common forms of non-transitory computer-readable media include, without limitation, a floppy disk, a flexible disk, hard disk, magnetic tape, or any other magnetic medium, a CD-ROM, any other optical medium, a RAM, a PROM, and EPROM, a FLASH-EPROM, any other memory chip, memory cartridge or memory stick, or any other medium from which a computer can read.

Various forms of non-transitory computer-readable media may be involved in storing instructions for processing by processor 504. For example, the instructions may initially be stored on a storage medium of a remote computer and transmitted to computer system 500 via one or more communications links. Bus 502 carries the data to main memory 506, from which processor 504 retrieves and processes the instructions. The instructions received by main memory 506 may optionally be stored on storage device 510 either before or after processing by processor 504.

Computer system 500 also includes a communication interface 518 coupled to bus 502. Communication interface 518 provides a communications coupling to a network link 520 that is connected to a local network 522. For example, communication interface 518 may be a modem to provide a data communication connection to a telephone line. As another example, communication interface 518 may be a local area network (LAN) card to provide a data communication connection to a compatible LAN. Wireless links may also be implemented. In any such implementation, communication interface 518 sends and receives electrical, electromagnetic or optical signals that carry digital data streams representing various types of information.

Network link 520 typically provides data communication through one or more networks to other data devices. For example, network link 520 may provide a connection through local network 522 to a host computer 524 or to data equipment operated by an Internet Service Provider (ISP) 526. ISP 526 in turn provides data communication services through the world wide packet data communication network now commonly referred to as the "Internet" 528. Local network 522 and Internet 528 both use electrical, electromagnetic or optical signals that carry digital data streams.

Computer system 500 can send messages and receive data, including program code, through the network(s), network link 520 and communication interface 518. In the Internet example, a server 530 might transmit a requested code for an application program through Internet 528, ISP 526, local network 522 and communication interface 518. The received code may be processed by processor 504 as it is received, and/or stored in storage device 510, or other non-volatile storage for later execution.

In the foregoing specification, embodiments have been described with reference to numerous specific details that may vary from implementation to implementation. Thus, the sole and exclusive indicator of what is, and is intended by the applicants to be, the invention is the set of claims that issue from this application, in the specific form in which such claims issue, including any subsequent correction. Hence, no limitation, element, property, feature, advantage or attribute that is not expressly recited in a claim should limit the scope of such claim in any way. The specification and drawings are, accordingly, to be regarded in an illustrative rather than a restrictive sense.

## Claims

1. A multi-function peripheral (MFP) comprising:
a network interface;
a user interface configured to display information to a user of the MFP and receive user input from the user of the MFP;
one or more processors;
one or more memories communicatively coupled to the one or more processors; and
a service application configured to:
receive, via the user interface of the MFP, a product key issued by an activation server, wherein the product key is specific to both the MFP and a first subset of one or more features, from a plurality of features supported by the service application,
generate and transmit, via the network interface over one or more networks to the activation server, an activation request that includes the product key,
receive, via the network interface over the one or more networks from the activation server, an activation response that specifies the first subset of one or more features, from the plurality of features supported by the service application,
in response to receiving, from the activation server, the activation response that specifies the first subset of one or more features, from the plurality of features supported by the service application, allowing user access on the MFP to the first subset of one or more features, from the plurality of features supported by the service application, and not allowing user access on the MFP to one or more other features, from the plurality of features supported by the service application, wherein the one or more other features are not part of the first subset of one or more features.

2. The MFP of Claim 1, wherein a particular feature, from the first subset of one or more features, from the plurality of features supported by the service application, provides access to a service that is external to the MFP.

3. The MFP of Claim 2, wherein the service that is external to the MFP includes one or more of a cloud printing service, a tracking service for billing, an archival service, an optical character recognition service, or a translation service.

4. The MFP of Claim 1, wherein:
the product key was received by the service application on the MFP at a first time,
the activation request is a first activation request and the activation response is a first activation response, and
the service application is further configured to:
receive, at a second time that is after a first time via the user interface of the MFP, the product key issued by the activation server, wherein at the second time the product key is specific to both the MFP and a second subset of one or more features, from the plurality of features supported by the service application, wherein the second subset of one or more features is different than the first subset of one or more features,
generate and transmit, via the network interface over the one or more networks to the activation server, a second activation request that includes the product key,
receive, via the network interface over the one or more networks from the activation server, a second activation response that specifies that the service application may grant user access to the second subset of one or more features, from the plurality of features supported by the service application,
in response to receiving, from the activation server, the second activation response that specifies that the service application may grant user access to the second subset of one or more features, from the plurality of features supported by the service application, allowing user access on the MFP to the second subset of one or more features, from the plurality of features supported by the service application, instead of the first subset of one or more features, and not allowing user access on the MFP to the one or more other features, from the plurality of features supported by the service application, wherein the one or more other features are not part of the second subset of one or more features.

5. The MFP of Claim 1, wherein the service application is further configured to:
receive, via the network interface over the one or more networks from the activation server, a notification of a second subset of one or more features, from the plurality of features supported by the service application, wherein the second subset of one or more features is different than the first subset of one or more features and corresponds to the product key,
in response to receiving, via the network interface over the one or more networks from the activation server, the notification of the second subset of one or more features, from the plurality of features supported by the service application, allowing user access on the MFP to the second subset of one or more features, from the plurality of features supported by the service application, instead of the first subset of one or more features, and not allowing user access on the MFP to the one or more other features, from the plurality of features supported by the service application, wherein the one or more other features are not part of the second subset of one or more features.

6. The MFP of Claim 1, wherein a charge is applied to each feature from the first subset of one or more features, from the plurality of features supported by the service application.

7. The MFP of Claim 1, wherein the service application is further configured to:
receive, from the activation server, a notification of a newer version of a particular feature from the first subset of one or more features, from the plurality of features supported by the service application,
in response to receiving, from the activation server, the notification of the newer version of a particular feature from the first subset of one or more features, from the plurality of features supported by the service application, causing a notification to be generated and displayed on the user interface of the MFP specifying that the newer version of the particular feature is available.

8. One or more non-transitory computer-readable media storing instructions which, when processed by one or more processors, cause:
a service application executing on a multi-function peripheral (MFP) to:
receive, via a user interface of the MFP, a product key issued by an activation server, wherein the product key is specific to both the MFP and a first subset of one or more features, from a plurality of features supported by the service application,
generate and transmit, via a network interface of the MFP over one or more networks to the activation server, an activation request that includes the product key,
receive, via the network interface of the MFP over the one or more networks from the activation server, an activation response that specifies the first subset of one or more features, from the plurality of features supported by the service application,
in response to receiving, from the activation server, the activation response that specifies the first subset of one or more features, from the plurality of features supported by the service application, allowing user access on the MFP to the first subset of one or more features, from the plurality of features supported by the service application, and not allowing user access on the MFP to one or more other features, from the plurality of features supported by the service application, wherein the one or more other features are not part of the first subset of one or more features.

9. The one or more non-transitory computer-readable media of Claim 8, wherein a particular feature, from the first subset of one or more features, from the plurality of features supported by the service application, provides access to a service that is external to the MFP.

10. The one or more non-transitory computer-readable media of Claim 9, wherein the service that is external to the MFP includes one or more of a cloud printing service, a tracking service for billing, an archival service, an optical character recognition service, or a translation service.

11. The one or more non-transitory computer-readable media of Claim 8, wherein:
the product key was received by the service application on the MFP at a first time,
the activation request is a first activation request and the activation response is a first activation response, and
the one or more non-transitory computer-readable media store additional instructions which, when processed by the one or more processors, cause the service application to:
receive, at a second time that is after a first time via the user interface of the MFP, the product key issued by the activation server, wherein at the second time the product key is specific to both the MFP and a second subset of one or more features, from the plurality of features supported by the service application, wherein the second subset of one or more features is different than the first subset of one or more features,
generate and transmit, via the network interface of the MFP over the one or more networks to the activation server, a second activation request that includes the product key,
receive, via the network interface of the MFP over the one or more networks from the activation server, a second activation response that specifies that the service application may grant user access to the second subset of one or more features, from the plurality of features supported by the service application,
in response to receiving, from the activation server, the second activation response that specifies that the service application may grant user access to the second subset of one or more features, from the plurality of features supported by the service application, allowing user access on the MFP to the second subset of one or more features, from the plurality of features supported by the service application, instead of the first subset of one or more features, and not allowing user access on the MFP to the one or more other features, from the plurality of features supported by the service application, wherein the one or more other features are not part of the second subset of one or more features.

12. The one or more non-transitory computer-readable media of Claim 8, wherein the one or more non-transitory computer-readable media store additional instructions which, when processed by the one or more processors, cause the service application to:
receive, via the network interface of the MFP over the one or more networks from the activation server, a notification of a second subset of one or more features, from the plurality of features supported by the service application, wherein the second subset of one or more features is different than the first subset of one or more features and corresponds to the product key,
in response to receiving, via the network interface of the MFP over the one or more networks from the activation server, the notification of the second subset of one or more features, from the plurality of features supported by the service application, allowing user access on the MFP to the second subset of one or more features, from the plurality of features supported by the service application, instead of the first subset of one or more features, and not allowing user access on the MFP to the one or more other features, from the plurality of features supported by the service application, wherein the one or more other features are not part of the second subset of one or more features.

13. The one or more non-transitory computer-readable media of Claim 8, wherein a charge is applied to each feature from the first subset of one or more features, from the plurality of features supported by the service application.

14. The one or more non-transitory computer-readable media of Claim 8, wherein the one or more non-transitory computer-readable media store additional instructions which, when processed by the one or more processors, cause the service application to:
receive, from the activation server, a notification of a newer version of a particular feature from the first subset of one or more features, from the plurality of features supported by the service application,
in response to receiving, from the activation server, the notification of the newer version of a particular feature from the first subset of one or more features, from the plurality of features supported by the service application, causing a notification to be generated and displayed on the user interface of the MFP specifying that the newer version of the particular feature is available.

15. A computer-implemented method comprising:
a service application executing on a multi-function peripheral (MFP) receiving, via a user interface of the MFP, a product key issued by an activation server, wherein the product key is specific to both the MFP and a first subset of one or more features, from a plurality of features supported by the service application,
generate and transmit, via a network interface of the MFP over one or more networks to the activation server, an activation request that includes the product key,
the service application executing on the MFP receiving, via the network interface of the MFP over the one or more networks from the activation server, an activation response that specifies the first subset of one or more features, from the plurality of features supported by the service application,
the service application executing on the MFP, in response to receiving, from the activation server, the activation response that specifies the first subset of one or more features, from the plurality of features supported by the service application, allowing user access on the MFP to the first subset of one or more features, from the plurality of features supported by the service application, and not allowing user access on the MFP to one or more other features, from the plurality of features supported by the service application, wherein the one or more other features are not part of the first subset of one or more features.
